# EUROPÄISCHE PATENTSCHRIFT

(11) **EP 0 802 573 B1**
(45) Veröffentlichungstag und Bekanntmachung des Hinweises auf die Patenterteilung: **17.05.2006**
(21) Anmeldenummer: 97102640.6
(22) Anmeldetag: 19.02.1997
(51) Int. Cl.: H01M 4/50, H01M 4/62, H01M 6/06

(54) **Galvanische Zelle**
Galvanic cell
Cellule galvanique

(30) Priorität: 20.04.1996 DE 19615724
(43) Veröffentlichungstag der Anmeldung: 22.10.1997
(73) Patentinhaber: VARTA Gerätebatterie GmbH, 30419 Hannover (DE)
(72) Erfinder: Jose, Horst-Udo, 73479 Ellwangen (DE); Feistner, Hans-Joachim, 73479 Ellwangen (DE)
(74) Vertreter: Dixon, Philip Matthew

(56) Entgegenhaltungen:
- EP-A- 0 608 887
- DATABASE WPI Section Ch, Week 9639 Derwent Publications Ltd., London, GB; Class L03, AN 96-391865 XP002091367 -& RU 2 050 637 C (KVANT SCI ENTERPRISE) , 20. Dezember 1995
- PATENT ABSTRACTS OF JAPAN vol. 011, no. 237 (E-528), 4. August 1987 -& JP 62 051164 A (FUJI ELELCTROCHEM CO LTD), 5. März 1987

## Beschreibung

Die Erfindung bezieht sich auf eine galvanische Zelle mit einem quecksilberfreies Zinkpulver enthaltenden Anodengel, einem alkalischen Elektrolyten und einer durch einen Separator davon getrennten Mangandioxid enthaltenden Kathodenmasse.

Batterien der vorgenannten Art sind als Alkali-Mangan-Primärzellen bekannt. Durch den aus Umweltschutzgründen bedingten Verzicht auf einen Quecksilberzusatz zum Zinkpulver weist das Anodenmaterial von Zellen der vorgenannten Art eine höhere Korrosion auf, die sich in einer höheren Selbstentladung und einer damit einhergehenden Gasungsrate äußert. Zur Vermeidung dieser negativen Effekte wurden schon zahlreiche Versuche unternommen. So sind z.B. dem als Zinkpulver eingesetzten Zink, die Metalle Bismuth, Indium, Blei, Aluminium und Kalzium zulegiert worden (s. US-A 5209995). Weiterhin ist es bekannt, dem Anodengel anorganische Gasungsinhibitoren wie Bariumhydroxid zuzusetzen (s. US-A 4418130). EP-A 582293 offenbart darüber hinaus den Zusatz eines Indiumsalzes zum Elektrolyten.

RU 205 06 37 offenbart eine Zink-luft Batterie mit einer Mangandioxid enthaltenden Kathodenmasse, die Calciumperchlorat enthält.

Eine weitere Verringerung der Gasungsrate ist aus Kostengründen und im Hinblick auf eine Verbesserung des Entladeverhaltens sowie eine Erhöhung der Kapazität der Zellen wünschenswert.

Die Erfindung hat sich die Aufgabe gestellt, eine Lösung für die vorgenannten Probleme anzugeben.

Erfindungsgemäß wird die Aufgabe dadurch gelöst, daß die Kathodenmasse von Zellen der vorgenannten Art salzartige Kalziumverbindungen in fester Form enthält.

Weitere vorteilhafte Ausgestaltungen des Erfindungsgegenstandes sind in den Unteransprüchen offenbart.

Der erfindungsgemäße Zusatz von Ca(OH)₂ und/oder CaSO₄ entfaltet seine Wirkung weitestgehend unabhängig von der verwendeten Zinksorte bzw. den darin enthaltenen Legieningskomponenten. Beim Einsatz von elektrolythaltigen Kathodenmassen wird bisher eine Erhöhung der Zellgasung festgestellt. Zurückzuführen ist dieser Effekt auf einen erhöhten Werkzeugverschleiß und einem damit verbundenen Schwermetalleintrag in die Kathodenmasse. Durch den erfindungsgemäßen Zusatz wird die Gasung auf das bekannte Niveau zurückgeführt. Weiterhin hat sich gezeigt, daß durch den erfindungsgemäßen Zusatz die Gasung bei teilentladenen Zellen vermindert und die Entladbarkeit der Zellen verbessert wird. Die den Zellen entnehmbare Kapazität ist sowohl bei konstanter Entladung als auch bei intermittierender Entladung erhöht.

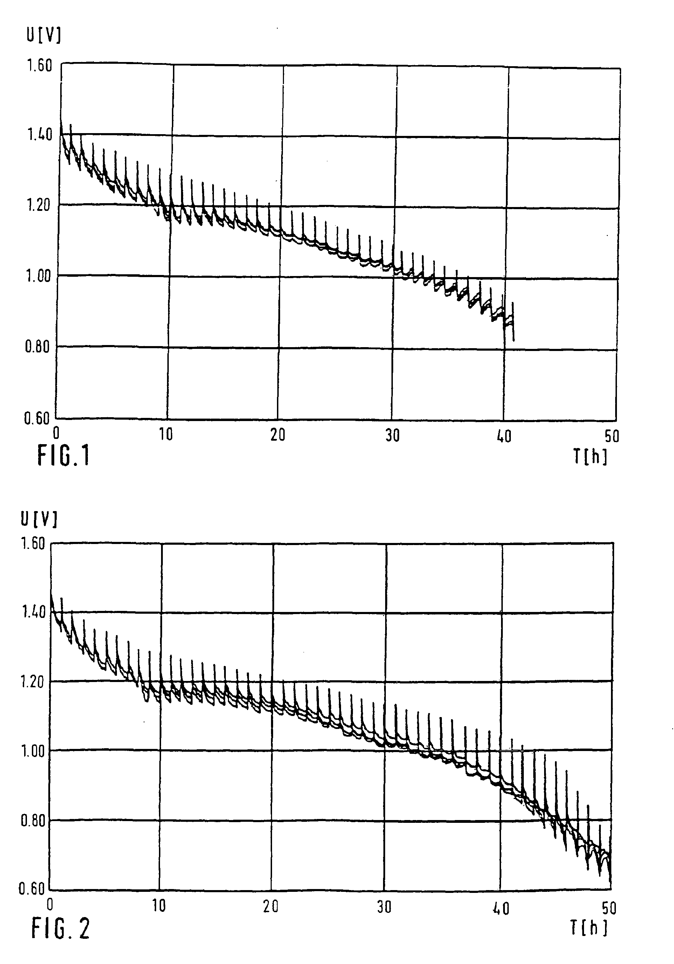

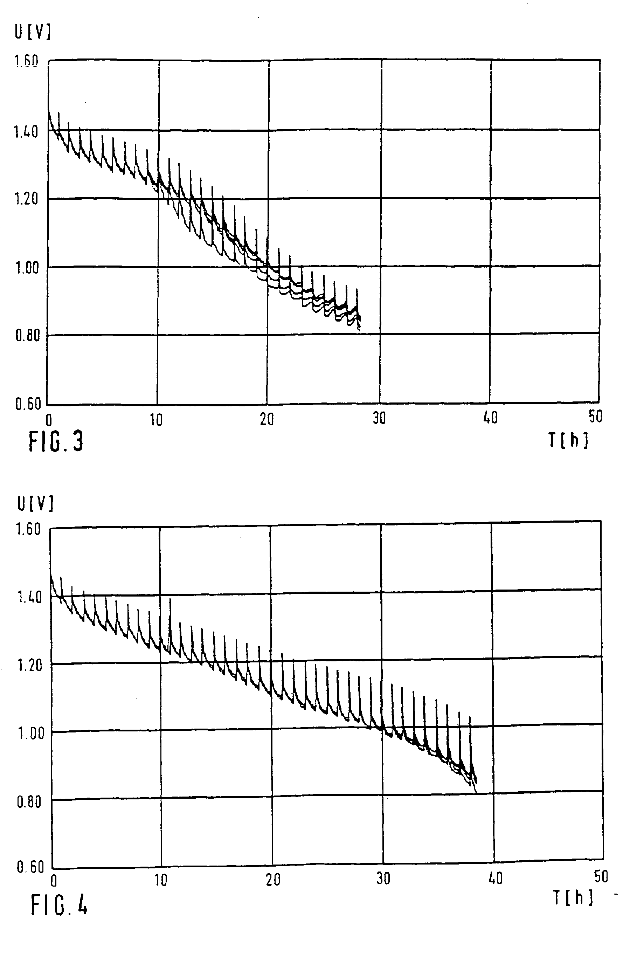

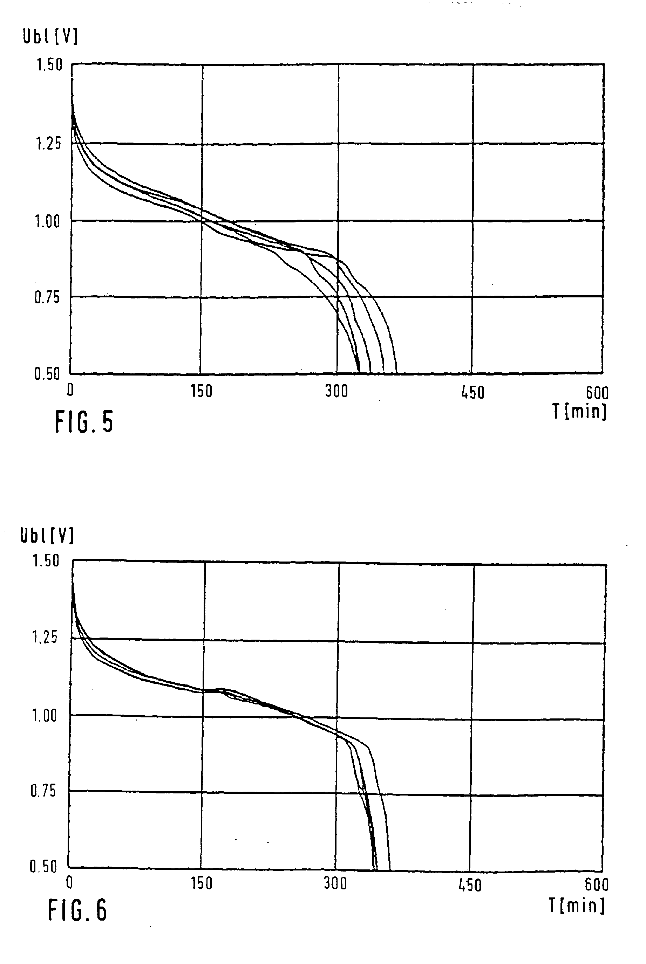

Die Erfindung wird nachfolgend anhand der Figuren 1 bis 6 und der Beispiele näher erläutert.

Es zeigen die Figuren 1 und 2 die Entladekurven des Vergleichsbeispiels 1 und des Beispiels 1 bei intermittierender Entladung von zwei mal einer Stunde am Tag (2 x 1h/d) über einen Widerstand von 3,9 Ohm von frisch hergestellten Zellen, d.h. die Lagerzeit N0 bezeichnet ungelagerte Zellen.

Die Figuren 3 und 4 zeigen die Entladekurven des Vergleichsbeispiels 1 und des Beispiels 1 unter den gleichen Entladebedingungen wie vorgenannt nach einer Lagerzeit der Zellen von einem Monat bei 70°C (MT 1).

In Figuren 5 und 6 sind die Entladekurven des Vergleichsbeispiels 3 und des Beispiels 3 zuentnehmen, die bei konstanter Entladung über einen Widerstand von 2Ω erhalten wurden. Die Zellen sind 7 Tage bei 70°C (7MT) gelagert worden.

### Beispiel 1:

40 Versuchszellen der Größe LR14 werden nach folgender Rezeptur erstellt:
Kathodenmasse:
   Feuchtmasse mit MnO₂ 8500g, Graphit 850g, Ca(OH)₂ 50g, 600g Elektrolyt (50%ige KOH)
Anodengel:
   Zinkpulver 680,0g, Verdicker (Carboxylierte Zellulose) 5,0g, Indiumoxid 0,25g, Ca(OH)₂·0,04g, Elektrolyt 314,71g.
   Elektrolyt: KOH 50%ige 760,0g, ZnO 20,0g, H₂O 220,0g
Separator:
   Kreuzwickelseparator aus Polyvinylacetat-Vlies (PVA-Vlies)

Pro Zelle werden 32,7g Kathodenmasse, 4,0g Elektrolyt zur Separatortränkung und 16g Anodengel eingesetzt. Als Zellenbecher wird ein Stahlbecher mit einer 0,2µm Nickel- und einer 0,2µm Kobaltauflage eingesetzt.

Vergleichsbeispiel 1: Es werden analog Beispiel 1 Versuchszellen hergestellt, die kein Calciumhydroxid in der Kathodenmasse enthalten.

Tabellen 1 und 2 zeigen einen Vergleich der Entladecharakteristiken von Versuchszellen die gemäß Beispiel 1 bzw. dem Vergleichsbeispiel 1 hergestellt wurden. Es werden jeweils die Werte von ungelagerten Zellen (Lagerzeit N0 = Frisch) und nach einer Lagerzeit von 1 Monat (28 Tage) bei 70°C =MT1 gegenübergestellt. Die Versuchszellen in Tabelle 1 werden dabei einer intermittierenden Entladung von 2 x 1 Stunde am Tag (2x1h/d) über einen Widerstand R = 6.8Ω unterzogen. Diese Entladeart ist ein Modell für Entladebedingungen in einem tragbarem Tonbandgerät.

Die Entladung der Versuchszellen in Tabelle 2 erfolgte unter intermittierenden Bedingungen 4 Minuten Entladen, 15 Minuten Pause 8 Stunden am Tag (4'/15' 8h/d) über einen Widerstand von 3,9Ω. Diese Entladeart ist ein Modell für eine Beleuchtungs-Entladung.

### Beispiel 2

Versuchszellen der Größe LR20 werden nach folgender Rezeptur gefertigt Kathodenmasse: MnO₂ 8500g, Graphit 850g, Ca(OH)₂ 50g, Elektrolyt (50%ige KOH) 600g. Anodengel: Zinkpulver 680,0g, Verdicker (carboxylierte Zellulose) 5.0g, Indiumoxid 0,25g, Ca(OH)₂ 0,04g, Elektrolyt (38%ige KOH + 2% ZnO) 314,71g Separator: Kreuzwickel Separator aus PVA-Vlies

Pro Zelle werden 69g Kathodenmasse, 9,0g Elektrolyt zur Separatortränkung und 37,5g Anodengel eingesetzt. Als Zellenbecher wird ein Stahlbecher mit 0,2µm Nickel und einer 0,2µm Kobaltauflage eingesetzt.

### Vergleichsbeispiel 2

Es wurden analog Beispiel 2 Versuchszellen hergestellt, die kein Calciumhydroxid in der Kathodenmasse enthalten.

Tabelle 3 zeigt die Entladecharakteristiken bei intermittierender Entladung 2x eine Stunde am Tag (2x1h/d) über einem Widerstand von 3,9Ω bzw. 2,2 n als Modell eine Entladung durch ein Tonband, wobei ungelagerte Zellen (NO) mit Zellen nach einer Lagerzeit von 1 Monat bei 70°C (MT1) sowie mit Zellen, die 3 Monate bei 45°C gelagert wurden (T3), verglichen werden.

### Beispiel 3

Versuchszellen der Größe LR14 werden nach folgender Rezeptur hergestellt:
Kathodenmasse: Feuchtmasse mit 600g Elektrolyt, MnO₂ 8500g und Graphit 850g, Calciumhydroxid 50g.
Anodengel: Zinkpulver 680g, Verdicker 5,0g, Indiumoxid 0,25g, Indiumsulfat 0,13g, Wasser 3,4g, Calciumhydroxid 0,12g, Elektrolyt 311,10g.
Elektrolyt: KOH 50%ige 760g, ZnO 40,0g, Wasser 200,0g.
Separator Kreuzwickel getränkt mit 4,0g Elektrolyt.
Pro Zelle werden 32,1g Kathodenmasse und 16g Anodengel eingesetzt.
Als Zellengefäß wird ein Stahlbecher mit einer Auflage von 0,2µm Nickel und 0,4µm Kobalt verwendet.

Tabelle 4 zeigt die Entladecharakteristiken der Versuchszellen nach Lagerzeiten von N0, 7MT und MT1 bei konstanter Entladung über einen Widerstand von 2 Ohm.

Die vorteilhafte Wirkung des erfindungsgemäßen Zusatzes ist insbesondere bei intermittierenden Entladung und dabei vorzugsweise nach einer Lagerung (7MT, MT1 oder T3-Lagerung) festzustellen. Die Unterschiede in den Kapazitäten können dabei bis zu 20% betragen.

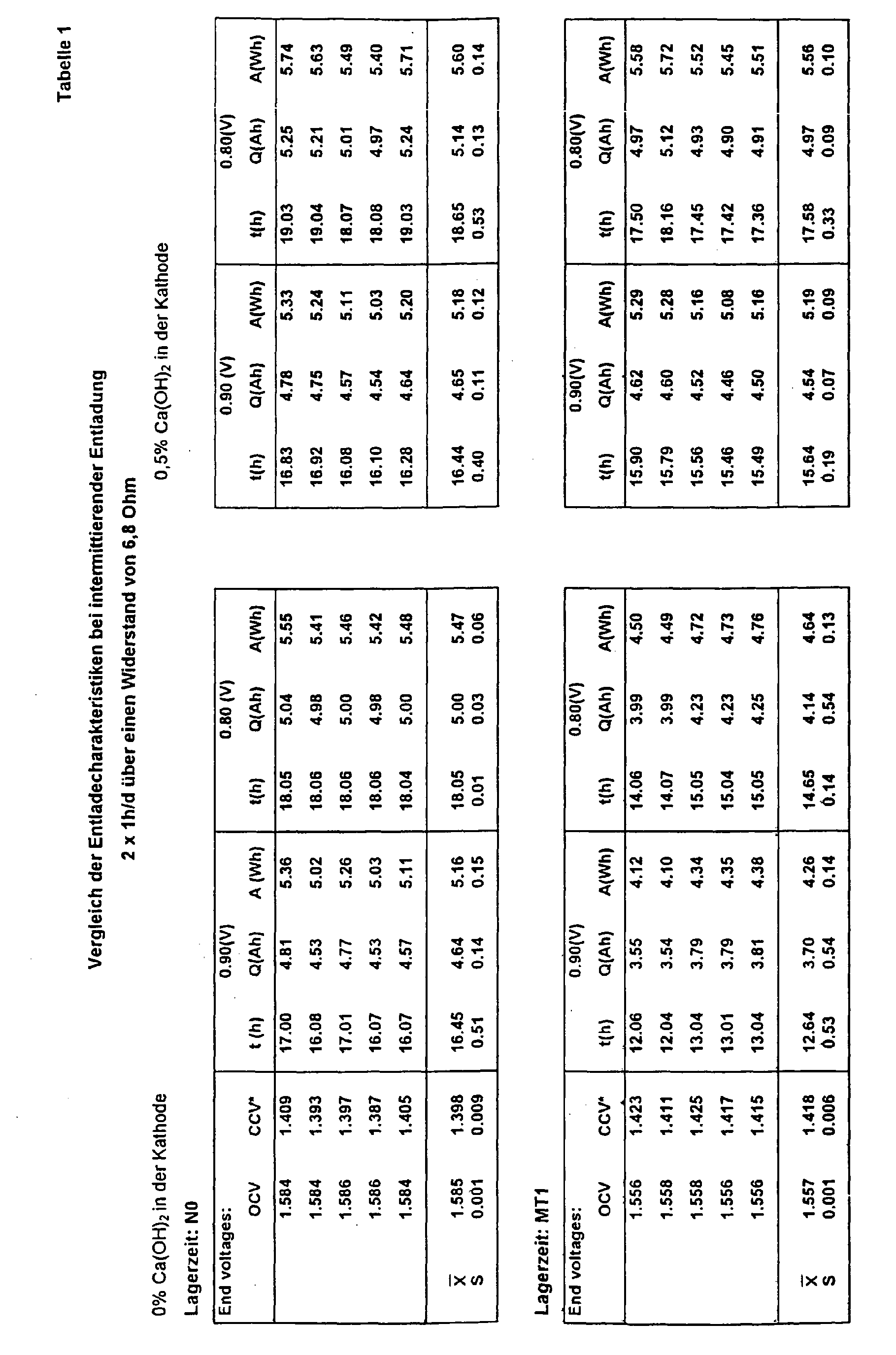

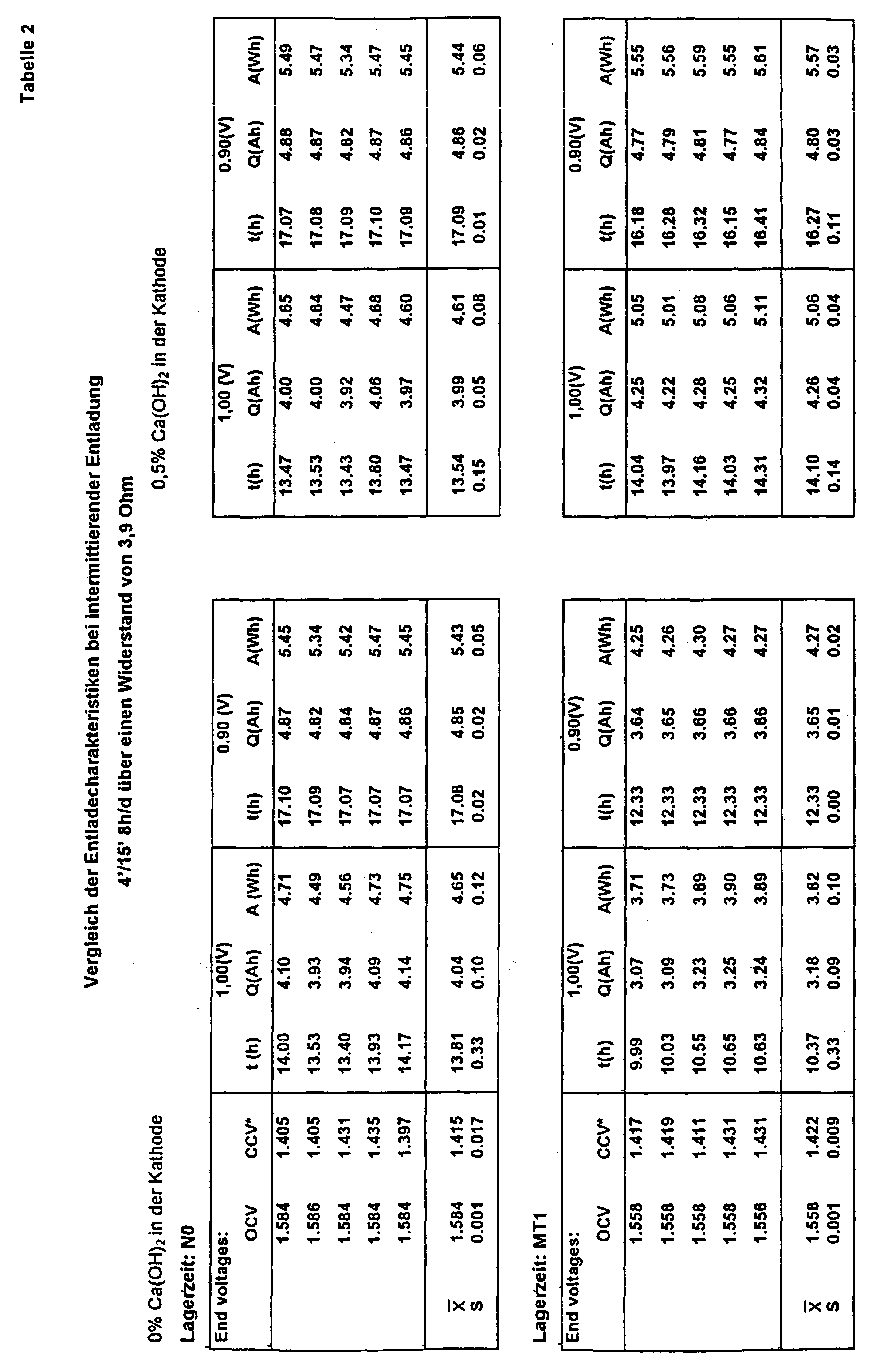

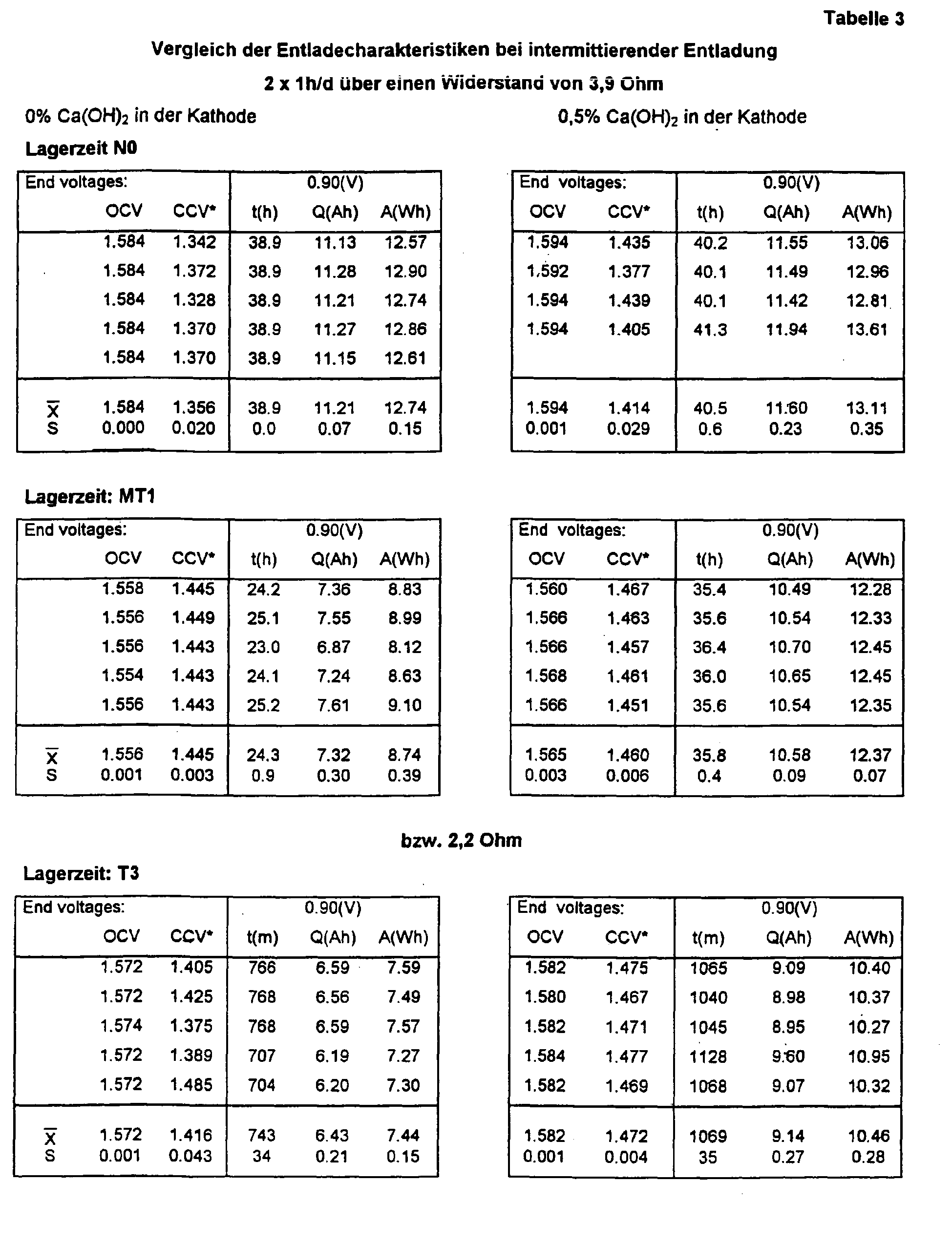

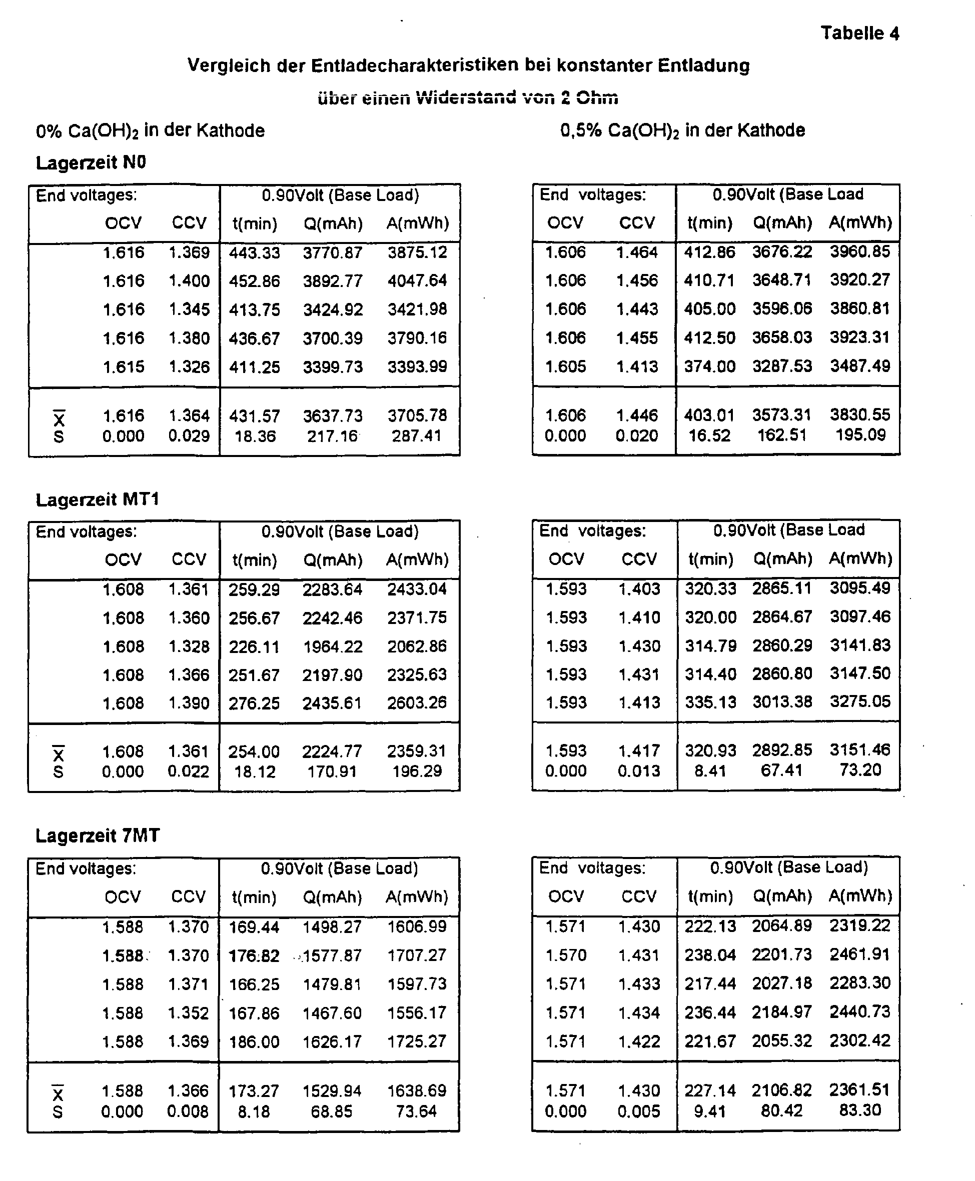

## Patentansprüche

1. Galvanische Zelle mit einem quecksilberfreies Zinkpulver enthaltenden Anodengel, einem alkalischem Elektrolyten und einer durch einen Separator davon getrennten Mangandioxid enthaltenden Kathodenmasse, **dadurch gekennzeichnet, daß** die Kathodenmasse salzartige Calcium-Verbindungen in fester Form enthält.

2. Galvanische Zelle nach Anspruch 1, **dadurch gekennzeichnet, daß** die Kathodenmasse 0,1 bis 5 Gew.% Calciumsulfat und/oder Calciumhydroxid enthält.

3. Zelle nach Anspruch 1, **dadurch gekennzeichnet, daß** die Kathodenmasse 0,3 bis 0,8 Gew.% Calciumhydroxid enthält.

4. Zelle nach einem oder mehreren der Ansprüche 1 bis 3, **dadurch gekennzeichnet, daß** die Kathodenmasse die salzartigen Calcium-Verbindungen in einer Komgröße von 0,1µm bis 30µm enthält.

5. Zelle nach einem oder mehreren Ansprüchen 1 bis 4, **dadurch gekennzeichnet, daß** 0,0010 bis 0,5 Gew.% Calciumhydroxid bezogen auf den Zinkanteil im Anodengel enthalten sind.

6. Zelle nach einem oder mehreren Ansprüche 1 bis 5, **dadurch gekennzeichnet, daß** 50 bis 500 ppm Indiumoxid und/oder Indiumsulfat im Anodengel enthalten sind.

## Claims

1. Galvanic cell having an anode gel containing mercury-free zinc powder, an alkaline electrolyte and, separated therefrom by a separator, a cathode mass containing manganese dioxide, **characterised in that** the cathode mass contains salt-like calcium compounds in solid form.

2. Galvanic cell according to claim 1, **characterised in that** the cathode mass contains 0.1 to 5 wt.% of calcium sulphate and/or calcium hydroxide.

3. Cell according to claim 1, **characterised in that** the cathode mass contains 0.3 to 0.8 wt.% of calcium hydroxide.

4. Cell according to one or more of claims 1 to 3, **characterised in that** the cathode mass contains the salt-like calcium compounds in a particle size of from 0.1 µm to 30 µm.

5. Cell according to one or more of claims 1 to 4, **characterised in that** 0.0010 to 0.5 wt.% of calcium hydroxide, based on the zinc content, are present in the anode gel.

6. Cell according to one or more of claims 1 to 5, **characterised in that** 50 to 500 ppm of indium oxide and/or indium sulphate are present in the anode gel.

## Revendications

1. Cellule galvanique avec un gel anodique contenant une poudre de zinc exempte de mercure, un électrolyte alcalin et une masse cathodique contenant du dioxyde de manganèse qui en est séparée par un diaphragme, **caractérisée en ce que** la masse cathodique contient sous forme solide des composés de calcium du genre sel.

2. Cellule galvanique selon la revendication 1, **caractérisée en ce que** la masse cathodique contient de 0,1 à 5 % en poids de sulfate de calcium et/ou d'hydroxyde de calcium.

3. Cellule selon la revendication 1, **caractérisée en ce que** la masse cathodique contient de 0,3 à 0,8 % en poids d'hydroxyde de calcium.

4. Cellule selon l'une quelconque des revendications 1 à 3, **caractérisée en ce que** la masse cathodique contient les composés de calcium du genre sel dans une granulométrie de 0,1 µm à 30 µm.

5. Cellule selon l'une quelconque des revendications 1 à 4, **caractérisée en ce que** de 0,0010 à 0,5 % en poids d'hydroxyde de calcium sont contenus dans le gel anodique par rapport à la proportion de zinc.

6. Cellule selon l'une quelconque des revendications 1 à 5, **caractérisée en ce que** de 50 à 500 ppm d'oxyde d'indium et/ou de sulfate d'indium sont contenus dans le gel anodique.
